# EUROPEAN PATENT SPECIFICATION

(11) **EP 4 461 596 B1**
(45) Date of publication and mention of the grant of the patent: **28.10.2026**
(21) Application number: 22956963.7
(22) Date of filing: 01.09.2022
(51) Int. Cl.: B60L 58/27, B60L 58/26, B60K 1/00, B60K 11/02, F16K 11/074

(54) **THERMAL MANAGEMENT SYSTEM**
WÄRMEVERWALTUNGSSYSTEM
SYSTÈME DE GESTION THERMIQUE

(43) Date of publication of application: 13.11.2024
(73) Proprietor: Johnson Electric International AG, 3280 Murten (CH)
(72) Inventor: LIU, Xiaoyu, Shenzhen, Guangdong 518125 (CN); CHEN, Anbang, Shenzhen, Guangdong 518125 (CN); WANG, Haitao, Shenzhen, Guangdong 518125 (CN); QIN, Ruifeng, Shenzhen, Guangdong 518125 (CN)
(74) Representative: Doherty, William
(86) International application number: PCT/CN2022/116574
(87) International publication number: WO 2024/045138

(56) References cited:
- WO-A1-2021/009318
- CN-A- 108 749 513
- CN-A- 109 228 962
- CN-A- 111 196 127
- CN-A- 112 440 671
- CN-U- 209 232 912
- DE-U1- 202014 102 795
- US-A- 4 139 355
- US-A1- 2022 097 487

## Description

### FIELD OF THE INVENTION

The present application relates to a heat exchange equipment, in particular to a thermal management system.

### BACKGROUND

For electric vehicles, there are diverse thermal management demands. For example, the battery needs to be cooled or heated under different operating conditions, the traction motor needs to be cooled, and the passenger cabinet needs to be cooled and heated. Therefore, the thermal management system for electric vehicles includes multiple heat exchange circuits for heat exchange medium, such as a motor fluid circuit, a battery fluid circuit, a passenger cabinet fluid circuit, etc. The thermal management system is required to adapt to different operating conditions. For example, when the battery needs to be cooled and the passenger cabinet needs to be heated, the passenger cabinet fluid circuit should be in fluid isolation from the battery circuit, to prevent the heat exchange medium from flowing between the passenger cabinet fluid circuit and the battery fluid circuit. When the battery and the passenger cabinet need to be heated at the same time, the passenger cabinet fluid circuit should be connected in series with the battery fluid circuit to enable the heat exchange medium to flow between the passenger cabinet fluid circuit to the battery circuit. Thus, under different operating conditions, the heat exchange medium has different flow controlling requirement. Existing thermal management system are difficult to fully satisfy the heat exchange demands in working conditions. This not only results in low heat exchange efficiency and serious waste of electrical energy, but also to some extent a limit of improvement of electric vehicle range, especially in special situations such as low temperature. WO 2021/009318 discloses a thermal management system for use in a vehicle in which the coolant flows of the two cooling circuits can be mixed with each other as required by means of a multi-way valve at an interface between a first cooling circuit for a battery and a second cooling circuit for an electric motor for driving the vehicle. The disclosure also relates to a vehicle with such a thermal management system as well as to a method for operating two cooling circuits of such a thermal management system.

### SUMMARY OF THE INVENTION

The present disclosure aims to provide a thermal management system and valve thereof that can effectively satisfy the heat exchange needs under various working conditions

In one aspect, the present disclosure provides a thermal management system including a first heat exchange circuit, a second heat exchange circuit, a functional part capable of exchanging heat with the first heat exchange circuit, a heating module connecting with the second heat exchanging circuit and a valve connecting with the first and second heat exchanging circuits. The valve defines a first flow channel and a second flow channel prevented form communicating with each other inside the valve. In response to a first work mode of the valve, the first and second heat exchange circuits are connected with each other in series to form a first fluid loop; In response to a second work mode of the valve, the first exchange circuit forms a second fluid loop and the second exchange circuit forms a third fluid loop which is in fluid isolation from the second fluid loop; In response to a third work mode of the valve, the first and second heat exchange circuits are connected with each other to form a first fluid loop, the first exchange circuit forms the second fluid loop and/or the second exchange circuit forms the third fluid loop. A flow ratio of flow volume of heat exchange medium circulating in the first fluid loop to the heat exchange medium in the second and/or third fluid loop can be adjusted by manipulation of the valve.

The first heat exchange circuit is provided with opposite first interface end and second interface end; the second heat exchange circuit is provided with opposite third interface end and fourth interface end; the valve comprises a valve housing and a valve core rotatably mounted in the valve housing; the valve housing defines a first port, a second port, a third port and a fourth port, correspondingly aligned with the first interface end, the second interface end, the third interface end, and the fourth interface end; the first flow channel and the second flow channel are defined in the valve core and configured to selectively enable fluid communication among the first port, a second port, a third port and a fourth port by rotation of the valve core as regard to the valve housing. The valve further comprises a sealing member positioned between the valve core and the valve housing, the sealing member defines four openings respectively aligning with the first port, the second port, the third port and the fourth port.

Preferably, the valve core are configured to be rotated between a first position and a second position, the valve is switched to the first work mode in response to the valve core is rotated to the first position to make the first flow channel communicate with both of the fist port and the fourth port, and the second flow channel communicate with both of the second port and the third port; the valve is switched to the second work mode in response to the valve core is rotated to the second position to make the first flow channel communicate with both of the fist port and the second port, and the second flow channel communicate with both of the third port and the third port.

Preferably, the valve is switched to the third work mode in response to the valve core is rotated to a third position to enable the first port to communicates with both of the second port and the fourth port through the first flow channel, and the third port to communicates with both of the second port and the fourth port through the second flow channel; by rotating the valve core as regard to the valve housing in a range between the first portion and the second position, a ratio of an overlapping area between the first flow channel and the second port to that between the first flow channel and the fourth port is variable, a ratio of an overlapping area between the second flow channel and the second port to that between second flow channel and the fourth port is variable.

Preferably, the valve housing is cylindrical and the first port, the second port, the third port and the fourth port are defined in an axial end of the valve housing.

Preferably, the first port, the second port, the third port and the fourth port are all sector-shaped and arranged at intervals in the circumferential direction.

Preferably, each of the first flow channel and the second flow channel is semicircular and spans a central angle of about 180°, each of the first port, the second port, the third port and the fourth port is sector-shaped, and spans a central angle of about 90°.

Preferably, the valve housing is hollow cylindrical, and the valve core is cylindrical and rotatably accommodated in the valve housing.

Preferably, the valve core further comprises a shaft extending outwards to connecting with a driving unit configured to drive the valve core to rotate.

Preferably, the valve housing is further provided with a fifth port, the third port and the fifth port are simultaneously connected to the third interface end of the second heat exchange circuit; the valve is switched to the third work mode in response to the valve core being rotated to a third position to enable the fourth port to communicate with both of the first port and the fifth port through the first flow channel, and the third port to communicate with the second port through the second flow channel.

Preferably, the thermal management system further comprises a manifold, wherein the manifold is positioned between the valve and the first and second heat exchange circuits and configured to interconnect the first to fifth ports of the valve to the first to forth interface ends, the manifold defines a groove to enable the third port and the fifth port to be kept in fluid communication with each other.

Preferably, the functional part is a battery.

Preferably, the heating module includes a heating element and a heat exchanger.

Preferably, the heating element is a positive temperature coefficient ceramic.

### BRIEF DESCRIPTION OF THE DRAWINGS

Figure 1 is a schematic diagram of fluid connection of a thermal management system according to a first embodiment of the present application, wherein the valve is in a first work mode.
Figure 2 is a schematic diagram of fluid connection of a thermal management system according to a first embodiment of the present application, wherein the valve is in a second work mode.
Figure 3 is a schematic diagram of fluid connection of a thermal management system according to a first embodiment of the present application, wherein the valve is in a third work mode.
Figure 4 is an explosion view of the valve of the thermal management system according to the first embodiment of the present application.
Figure 5 is another an explosion view of the valve of the thermal management system according to the first embodiment similar but shown with a different aspect.
Figure 6 is a cross-sectional view of a valve of the thermal management system of the first embodiment.
Figure 7 is a plan view of a valve core of the valve of the thermal management system of the first embodiment.
Figure 8 is a schematic diagram showing flow of heat exchange medium in the valve in the first work mode.
Figure 9 is a schematic diagram showing flow of heat exchange medium in the valve in the second work mode.
Figure 10 is a schematic diagram showing flow of heat exchange medium in the valve in the third work mode.
Figure 11 is a plan view of the valve of a thermal management system provided according to a second embodiment of the present application.
Figure 12 is a plan view of a valve core of the thermal management system according to the second embodiment.
Figure 13 is a schematic diagram of the thermal management system according to a third embodiment.
Figure 14 is an explosion view of the valve of the thermal management system according to the third embodiment of the present application.
Figure 15 is another an explosion view of the valve of the thermal management system according to the third embodiment of the present application but shown with a different aspect.
Figure 16 is a cross-sectional view of a valve of the thermal management system according to the third embodiment.
Figure 17 is a perspective view of the valve of the thermal management system according to the third embodiment.
Figure 18 is a schematic diagram showing flow of the heat exchange medium in the valve in a first work mode.
Figure 19 is a schematic diagram showing flow of the heat exchange medium in the valve in a second work mode.
Figure 20 is a schematic diagram showing flow of the heat exchange medium in the valve in a third work mode.

### DETAILED DESCRIPTION OF THE PREFERRED EMBODIMENTS

The present invention will be further described below based on the drawings and the embodiments.

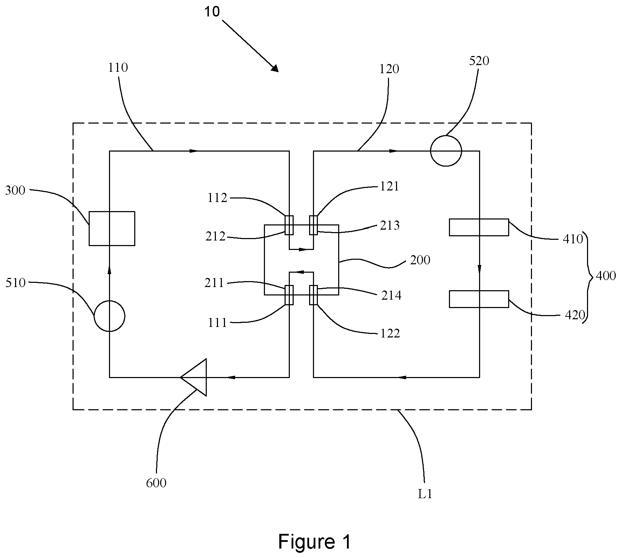

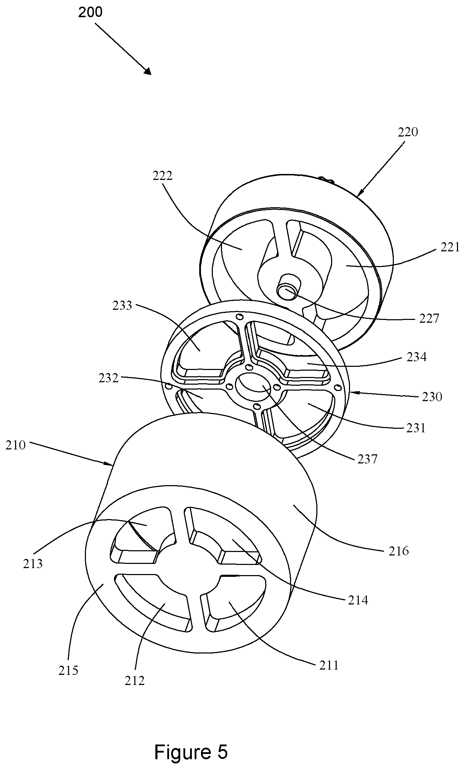

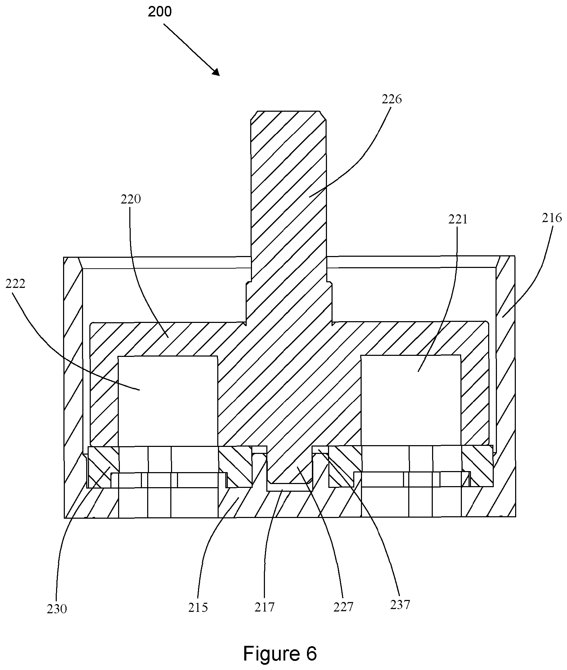

Referring to Figure 1-10, a thermal management system 10 according to a first embodiment of present application includes a first heat exchange circuit 110, a second heat exchange circuit 120, a valve 200 connecting with the first heat exchanging circuit 110 and the second heat exchanging circuit 120, a functional part 300 capable exchanging heat with the first heat exchange circuit 110, and a heating module 400 connecting with the second heat exchanging circuit 120.

Referring to figure 1-3, the first heat exchange circuit 110 and the second heat exchange circuit 120 are configured for the heat exchange medium 700 circulating therein. The heat exchange medium 700 can circulate in fluid loops defined by the first heat exchange circuit 110 and/or the second heat exchange circuit 120 for heat transferring. The heat exchange medium 700 can be in gaseous, liquid or gas-liquid mixed state. In one embodiment, the heat exchange medium 700 is a liquid state. Specifically, it can be liquid water. The heating module 400 is used for heating the heat exchange medium 700 flowing in the second heat exchange circuit 120. Then, the heated heat exchange medium 700 transfers heat to other parts of the thermal management system 10, such as the functional part 300 by flowing through the fluid loops. The functional part 300 is configured to be able to carry out heat exchange with the heat exchange medium 700 in the first heat exchange circuit 110, for example, the functional part 300 can be heated by absorbing the heat from the heat exchange medium 700 flowing through the first heat exchange circuit 110; Alternatively, the heat exchange medium 700 can be cooled by transferring heat to the heat exchange medium 700 flowing through the first heat exchange circuit 110.

The heating module 400 includes a heating element 410, in embodiments, the heating element 410 is preferably a positive temperature coefficient ceramic (PTC) heating element capable of heating the heat exchange medium 700 through direct energy converting from electric power into heat energy. In other embodiments, the heating element 410 may be a condenser of an air-conditioning system. Refrigerant absorbs the heat from environment in an evaporator of the air-conditioning system, and the absorbed heat is released in a condenser to heat the heat exchange medium 700 flowing therethrough.

In some embodiments, the heating module 400 further includes a heat exchanger 420, thereby improving the heat exchange efficiency of the heat exchange medium 700.

The functional part 300 should be temperature controlled when the thermal management system 10 is used in different applications. For example, when thermal management system 10 is used in electric vehicles, functional part 300 can be a battery. When environmental temperature is too low, the thermal management system 10 is configured to heat the battery to reduce low temperature attenuation of the power battery. When environmental temperature is too high, the thermal management system 10 is configured to cool the battery to avoid overheat of the battery and safety hazards.

In some embodiments, heat sink, heat pipes and other heat conductive parts are arranged between the functional part 300 and the first heat exchange circuit 110 for teat transferring by means of thermal conduction; Alternatively, heat can be transferred by means of thermal radiation between the two. It is not limited to specific embodiments.

The valve 200 defines a first flow channel 221 and a second flow channel 222 that are not connected with each other inside the valve 200. Corresponding to different work modes, the valve 200 is enabled to be in fluid communication with the first heat exchange circuit 110 and the second heat exchange circuit 120 through the first flow channel 221 and the second flow channel 222 selectively, thereby defining one or more fluid loops with the first heat exchange circuit 110 and the second heat exchange circuit 120. When multiple fluid loops are defined, the fluid loops can be communicated with one another to enable heat exchange medium 700 to flow from one of the fluid loops to another. Alternatively, the fluid loops are isolated from one another, i.e. the heat exchange medium 700 cannot be exchanged among the fluid loops. The valve 200 has at least three different work mode as below:

When the valve is switched to a first work mode as shown in figure 1, the first flow channel 221, the second flow channel 222 are connected in series between the first heat exchange circuit 110 and the second heat exchange circuit 120, so that the first heat exchange circuit 110 and the second heat exchange circuit 120 are connected with each other in series to form a first fluid loop L1. In other words, when the valve 200 is in the first work mode, the first heat exchange circuit 110 and the second heat exchange circuit 120 cooperatively define the first fluid loop L1. The heat exchange medium 700 can flow from the second heat exchange circuit 120 to the first heat exchange circuit 110, and heat can be transferred from the second heat exchange circuit 120 to the first heat exchange circuit 110, to heat the functional part 300.

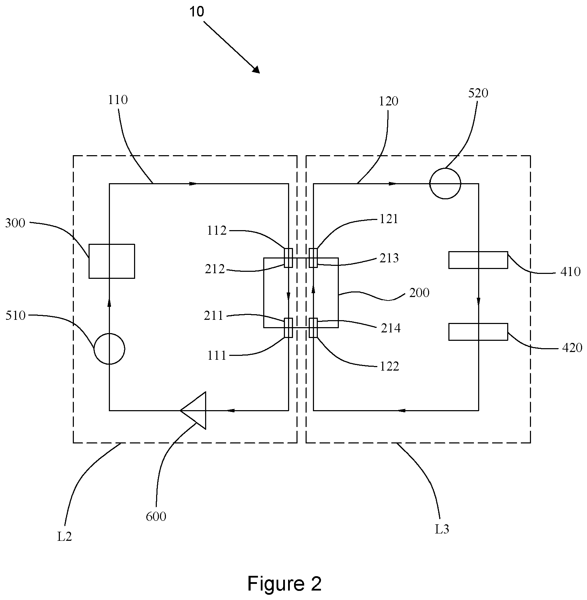

When the valve is switched to a second work mode as shown in figure. 2, the first flow channel 221 is connected to two ends of the first heat exchange circuit 110 to form a second fluid loop L2, the second flow channel 222 is connected with two ends of the second heat exchange circuit 120 to form the third fluid loop L3, and the second fluid loop L2 and the third fluid loop L3 are connected in parallel and fluid isolation with each other. In other words, when the valve 200 is in the second work mode, part of the heat exchange medium 700 can circulate in the first heat exchange circuit 110, and part of the heat exchange medium 700 can circulate in the second heat exchange circuit 120. However, the heat exchange medium 700 cannot flow from the second heat exchange circuit 120 to the first heat exchange circuit 110 to conduct heat transferring from the second heat exchange circuit 120 to the first heat exchange circuit 110. The functional part 300 are cooled by the heat exchange medium 700 circulating in the first heat exchange circuit 110.

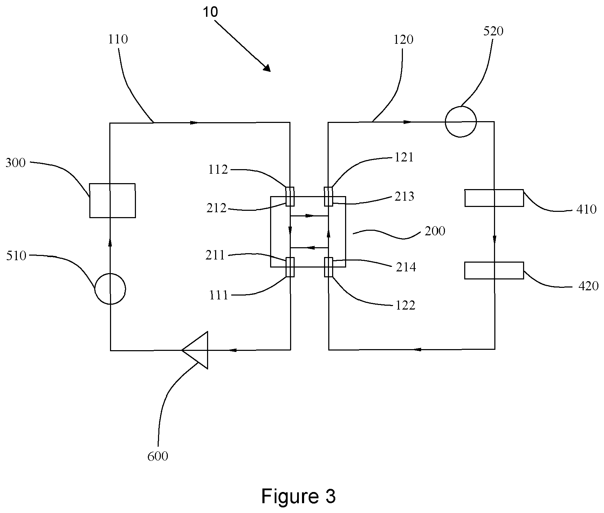

When the valve is switched to a third work mode as shown in figure 3, the first flow channel 221, the second flow channel 222 are connected in series between the first heat exchange circuit 110 and the second heat exchange circuit 120 to cooperatively form the first fluid loop L1. At the same time, the first flow channel 221 is connected to two ends of the first heat exchange circuit 110 to form the second fluid loop L2, and/or the second flow channel 222 is connected with two ends of the second heat exchange circuit 120 to form the third fluid loop L3. Moreover, a flow ratio of heat exchange medium 700 circulating in the first fluid loop L1 to that within the second or third fluid loop L2 or L3 can be adjusted by manipulation of the valve 200.

When the valve 200 is in the third work mode, part of the heat exchange medium 700 can circulate in the first fluid loop L1 cooperatively formed by the first heat exchange circuit 110 and the second heat exchange circuit 120. Other part of the heat exchange medium 700 can circulate in the second fluid loop L2 or the second fluid loop L3 respectively formed by the first heat exchange circuit 110 or the second heat exchange circuit 120. Heat can be transferred from the second heat exchange circuit 120 to the first heat exchange circuit 110 with volume of heat to be transferred can be controlled by adjusting a volume of the heat exchange medium 700 in the first fluid loop L1, that is, it can be adjusted by manipulation of the valve 200.

When the functional part 300 needs to be heated up (such as the battery temperature is too low), the valve 200 is switched to the first work mode or the third work mode. Then, the first heat exchange circuit 110 and the second heat exchange circuit 120 are connected in series and communicate with each other. The heat exchange medium 700 in heat exchange circuit 120 is heated by the heating module 400, and then flows entirely (in the first work mode) or partially (in the third work mode) to the first heat exchange circuit 110, and the heat generated by the heating module 400 is transferred to the functional part 300 to heat it, so that the energy is fully utilized, and the energy consumption efficiency is improved.

When functional parts 300 need to cool down (such as battery temperature is too high), the valve 200 is switched to the first work mode or the second work mode. Then, the first heat exchange circuit 110 and the second heat exchange circuit 120 are connected in parallel and are not in fluid communication with each other. The second fluid loop L2 and the third fluid loop L3 are separately defined by the first heat exchange circuit 110 and the second heat exchange circuit 120, respectively. The heat exchange medium 700 in the second heat exchange circuit 120 cannot flows to the first heat exchange circuit 110 to avoid heat generated by the heating module 400 from being transferred to the first heat exchange circuit 110 and the functional part 300. The functional part 300 can also be cooled through the heat exchange medium 700 flowing in the first heat exchange circuit 110. Since there is no heat exchange medium 700 exchange between the first heat exchange circuit 110 and the second heat exchange circuit 120, the heat exchange medium 700 in the second heat exchange circuit 120 can be heated without making against heat dissipation of the functional part 300. Poor heat dissipation efficiency of the functional part 300 is avoided.

The embodiment of the present application provides a heat management system 10, can well match the various heat exchange requirements of the functional part 300, with less heat loss and excellent. heat exchange effect.

The heat exchange medium 700 can be driven to flow through the first heat exchange circuit 110 and/or the second heat exchange circuit 120 by a driving member. such as a pump, etc. Referring to figure 1-2, in one embodiment, the thermal management system 10 further includes a first driving member 510 arranged in the first heat exchange circuit 110. When the valve 200 is in the first work mode, the first driving member 510 drives the heat exchange medium 700 to circulate in the first fluid loop L1, defined by the first heat exchange circuit 110 and the second heat exchange circuit 120. When the valve 200 is in the second work mode, the first driving member 510 drives the heat exchange medium 700 to circulate in the second fluid loop L2, defined by the first heat exchange circuit 110.

In some embodiments, the thermal management system 10 further includes a second driving member 520 arranged in the second heat exchange circuit 120. When the valve 200 is in the first work mode, the first driving member 510 and the second driving member 520 drives the heat exchange medium 700 in a same direction and cooperatively drive the heat exchange medium 700 to circulate in the first fluid loop L1. When the valve 200 is in the second work mode, the second driving member 520 drives the heat exchange medium 700 to circulate in the third fluid loop L3 defined by the second heat exchange circuit 120. In this embodiment, the second driving member 520 and the first driving member 510 have equal driving force. In other embodiments, the second driving member 520 has a driving force greater or less than that of the first driving member 510.

To ensure the heat exchange medium 700 in the first heat exchange circuit 110 to flow in a single direction, in one embodiment, the thermal management system 10 further includes a check valve 600 arranged in the first heat exchange circuit 110.

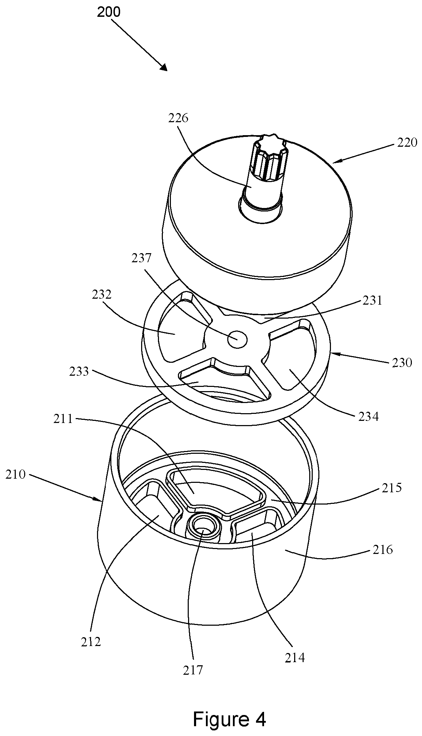

Referring to figure 1-3, the first heat exchange circuit 110 includes opposite first interface end 111 and second interface end 112; the second heat exchange circuit 120 includes opposite third interface end 121 and fourth interface end 122. Referring to figure 4-6, the valve 200 is provided with a first port 211, a second port 212, a third port 213 and a fourth port 214. The port 211 and the second port 212 of the valve 200 are correspondingly aligned with the first interface end 111 and the second interface end 112 of the first heat exchange circuit 110; the third port 213 and the fourth port 214 of the valve 200 are correspondingly aligned with the third interface end 121 and the fourth interface end 122 of the second heat exchange circuit 120. Connection among the first port 211, the second port 212, the third port 213 and the fourth port 214 inside the valve 200 through the first flow channel 221 and the second flow channel 222 can be changed to enable switching among the first work mode, the second work mode and the third work mode.

Specifically, referring to figure 4-7, the valve 200 includes a valve housing 210 and a valve core 220 rotatably mounted in the valve housing 210. The valve housing 210 is cylindrical and includes an end plate 215 and an annular side plate 216 that extends perpendicular from the outer edge of the end plate 215, and the end plate 215 and the side plate 216 are enclosed to form a space to receive the valve core 220. The first port 211, the second port 212, the third port 213 and the fourth port 214 are defined in the end plate 215 and are arranged at intervals in the circumferential direction thereof. Preferably, the first port 211, the second port 212, the third port 213 and the fourth port 214 are all sector-shaped with same size. Each of the ports 211~214 spans a central angle of about 90°.

The valve core 220 is cylindrical. An axial end of valve core 220 facing the end plate 215 of the valve housing 210 is concave to form the first flow channel 221 and the second flow channel 222. The first flow channel 221 and the second flow channel 222 are semicircular, and each spans a central angle of about 180°. The valve core 220 is rotatable between a first position and a second position. Preferably, the first and second positions differs from each other by 90 degrees circumferentially. When the valve core 220 rotates to different positions, connection among the first port 211, the second port 212, the third port 213 and the fourth port 214 inside the valve 200 through its first flow channel 221 and the second flow channel 222 are changed, to enable different work modes of the valve 200, specifically:

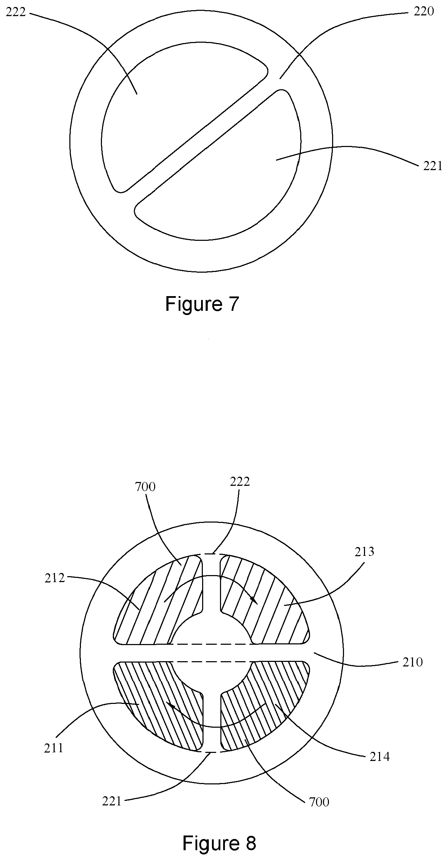

Referring to figure 1 and 8, when the valve core 220 rotates to the first position, the valve 200 is in the first work mode. Then, the first flow channel 221 is aligned and in fluid commutation with both of the first port 211 and the fourth port 214, so that the first interface end 111 of the first heat exchange circuit 110 and the fourth interface end 122 of the second heat exchange circuit 120 are in fluid communication; At the same time, the second flow channel 222 is aligned and in fluid commutation with both of the second port 212 and the third port 213, so that the second interface end 112 of the first heat exchange circuit 110 and the third interface end 121 of the second heat exchange circuit 120 are in fluid communication. Referring to the arrow shown in the figure 1, the heat exchange medium 700 can flow from the second heat exchange circuit 120 to the first heat exchange circuit 110 via the fourth port 214 and the first port 211 in sequence, and then flow back to the second heat exchange circuit 120 from the first heat exchange circuit 110 via the second port 212 and the third port 213 in sequence, thereby circulating in the first fluid loop L1.

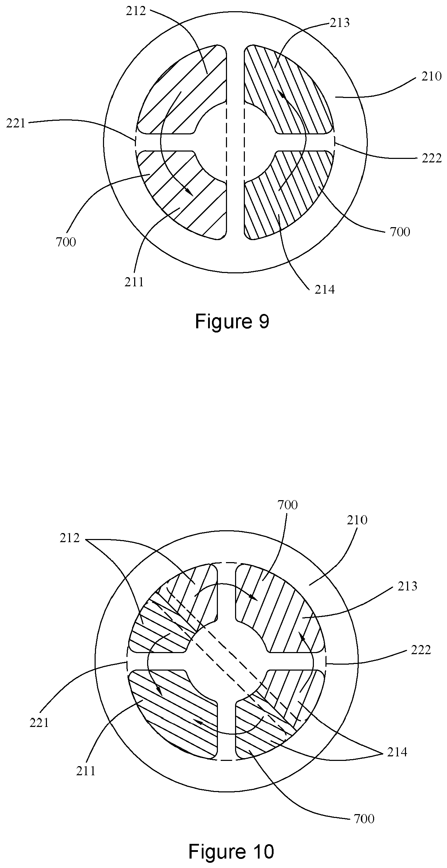

Referring to figure 2 and 9, when the valve core 220 rotates to the second position, the valve 200 is in the second work mode. Then, the first flow channel 221 is aligned and in fluid commutation with both of the first port 211 and the second port 212, so that the first interface end 111 and the second interface end 112 of the first heat exchange circuit 110 are in fluid communication. At the same time, the second flow channel 222 is aligned and in fluid commutation with both of the third port 213 and the fourth port 214, so that the third interface end 121 and the fourth interface end 122 of the second heat exchange circuit 120 are in fluid communication. Referring to the arrow shown in the figure 2, the heat exchange medium 700 flows out of the first heat exchange circuit 110 via the second interface end 112 and returns to the first heat exchange circuit 110 via the second port 212 and the first port 211 in sequence, thereby circulating in the second fluid loop L2; The heat exchange medium 700 flowing out of the second heat exchange circuit 120 via the fourth interface end 122 and returns to the second heat exchange circuit 120 via the fourth port 214 and the third port 213 in sequence, thereby circulating in the third fluid loop L3.

Referring to figure 3 and 10, the valve 200 can also be switched to the third work mode by driving the valve core 220 to a third position between the first and second positions. Then, the first flow channel 221 is aligned with the first port 211, and partially aligned with the second port 212 and the fourth port 214, so that the first interface end 111 of the first heat exchange circuit 110 is in fluid communication with the second interface end 112 as well as in fluid communication with the fourth interface end 122 of the second heat exchange circuit 120; At the same time, the second first flow channel 222 is aligned with the third port 213, and partially aligned with the second port 212 and the fourth port 214, so that the third interface end 121 of the second heat exchange circuit 120 is in fluid communication with the fourth interface end 122 as well as in fluid communication with the second interface end 112 of the first heat exchange circuit 110.

Referring to the arrow shown in the figure 3, the heat exchange medium 700 flow out of the second heat exchange circuit 120 via the fourth interface end 122 and enters the valve 200 via the fourth port 214, and then part of the heat exchange medium 700 returns to the second heat exchange circuit 120 through the third port 213, thereby circulating in the third fluid loop the L3; other part of the heat exchange medium 700 flows into the first heat exchange circuit 110 via the first port 211, thereby circulating in the first fluid loop L1. At the same time, the heat exchange medium 700 flow out of the first heat exchange circuit 110 via the second interface end 112 and enters the valve 200 via the second port 212, and then part of the heat exchange medium 700 returns to the first heat exchange circuit 110 via the first port 211 , thereby circulating in the second fluid loop the L2; other part of the heat exchange medium700 flows into the second heat exchange circuit 120 via the third port 213 , thereby circulating in the first fluid loop L1. In other words, first part of the heat exchange medium 700 can circulate in the first fluid loop L1, simultaneously, second part of the heat exchange medium 700 can circulate in the second fluid loop L2, and third part of the heat exchange medium 700 can circulate in the third fluid loop L3.

In one embodiment, by rotating the valve core 220 as regard to the valve housing 210 in a range between the first portion and the second position, overlapping area between the first flow channel 221 and the second port 212 or the fourth port 214, and overlapping area between the second flow channel 222 and the second port 212 or the fourth port 214 can also be adjusted. Therefore, a flow ratio of heat exchange medium 700 circulating in the first fluid loop L1 to that in the second or third fluid loop L2 and/or L3 can be adjusted when the valve 200 is in the third work mode. The larger the overlapping area of the first flow channel 221 and the fourth port 214, the smaller the overlapping area of the first flow channel 221 and the second port 212. Correspondingly, the larger the overlapping area of the second flow channel 222 and the second port 212, the smaller the overlapping area of the second flow channel 222 and the second port 214. By adjusting the rotation angle of the valve core 220, the ratio of the overlapping area of the first flow channel 221 and the second port 212 to the overlapping area of the first flow channel 221 and the fourth port 214 is variable, and the ratio of the overlapping area of the second flow channel 222 and the second port 212 to the overlapping area of the second flow channel 222 and the fourth port 214 is variable.

When the overlapping area of the first flow channel 221 and the fourth port 214 and the overlapping area of the second flow channel 222 and the second port 212 are relatively large, most of the heat exchange medium 700 heated by the heating module 400 in the second heat exchange circuit 120 will be led to the first heat exchange circuit 110, the functional part 300 will be heated up fast with high upper temperature limit;

When the overlapping area of the first flow channel 221 and the fourth port 214, and the overlapping area of the second flow channel 222 and the second port 212 are relatively small, only a small part of the heat exchange medium 700 heated by the heating module 400 in the second heat exchange circuit 120 will be led to the first heat exchange circuit 110, the functional part 300 will be heated up slowly with low upper temperature limit.

When the valve 200 is in the third work mode, the overlapping area of the first flow channel 221 and the fourth port 214 is less than a total opening area of the fourth port 214. Therefore, only part of the heat exchange medium 700 in the second heat exchange circuit 120 is led to the first heat exchange circuit 110. When the valve 200 in the third work mode, a heating efficiency for the functional part 300 decreases compared to when the valve 200 in the first work mode. When it is required to heat up the functional part 300 faster or raise a temperature of the functional part 300 to a higher upper limit, the valve 200 can be adjusted to the first work mod; Otherwise, the valve 200 can optionally be adjusted to the third work mode.

In some embodiments, the valve core 220 further comprises a shaft 226, which extends outward from the centre of the valve core 220 away from the base plate 215 of the valve housing 210 for connecting with a driving unit, such as a motor, etc. Preferably, the shaft 226 is connected with a gear mechanism, and the motor drive the valve core 220 to rotate as regard to the valve housing 210 via the gear mechanism. In one embodiment, a post 227 protrudes from a centre of the valve core 220 towards the valve housing 210. A centre of the end plate 215 of the valve housing 210 defines a positioning hole 217, and the post 227 can be rotatably engaged in the shaft hole 217. The first flow channel 221 and the second flow channel 222 are arranged on opposite two sides of the post 227. The first port 211, the second port 212, the third port 213 and the fourth port 214 are arranged at identical intervals around the shaft hole 217.

In one embodiment, a sealing member 230 is sandwiched between an end of the valve core 220 and the end plate 215 of the valve housing 210. Referring to figure 4-6, the sealing member 230 is a gasket made of flexible material, such as rubber, silica gel, etc., which can effectively avoid a risk of leakage of the heat exchange medium 700 from a joint of the valve core 220 and the valve housing 210. The sealing member 230 defines an opening 231, a second opening 232, a third opening 233 and a fourth opening 234, which are respectively in alignment with the first port 211, the second port 212, the third port 213 and the fourth port 214 of the valve housing 210. A through hole 237 is defined in a centre of the sealing member 230 for the post 227 engaged therein. The first opening 231, the second opening 232, the third opening 233 and the fourth opening 234 are arranged around the through hole 237.

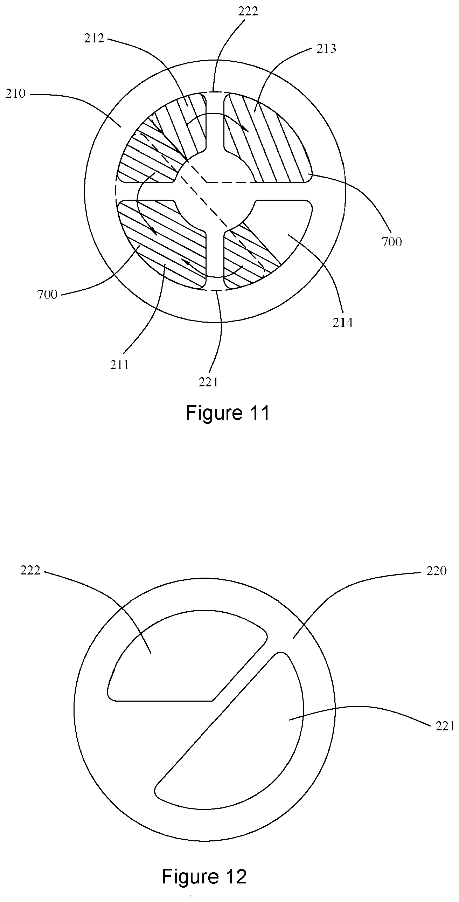

Referring to figure 11-12, the thermal management system 10 according to a second embodiment of present application is provided. In this embodiment, the valve core 220 of the valve 200 is different from that in the first embodiment. In this embodiment, the first flow channel 221 is semicircular with a central angle of about 180. The second flow channel 222 is sector-shaped with a central angle less than 180°.

When the valve core 220 rotates to the third position form the first position to the second position, the second flow channel 222 can partially aligns and communicates with both of the third port 213 and the second port 212, but completely misaligns with the fourth port 214. So that the third port 213 and the fourth port 214 is not in fluid communication with each other. At this circumstance, the heat exchange medium 700 flowing out of the second heat exchange circuit 120 via the fourth interface end 122 can only flow into the first heat exchange circuit 110 through the fourth port 214 and the first port 211 in sequence. The heat exchange medium 700 flowing out of the first heat exchange circuit 110 via the second interface end 112 can partially return to the first heat exchange circuit 110 through the second port 212 and the first port 211 in sequence, and partially flow into the second heat exchange circuit 120 through the second port 212 and the third port 213 in sequence. Therefore, at this circumstance, the heat exchange medium 700 can only circulate in the first fluid loop L1 and the second fluid loop L2 to improve the overall thermal efficiency of the thermal management system 10.

In some embodiments, the first flow channel 221 can be sector-shaped with a central angle less than 180°. When the valve core 220 rotates to the third position form the first position to the second position, the first flow channel 221 can partially aligns and communicates with both of the first port 211 and part of the fourth port 214, but completely misaligns with the second port 212.

So that the first port 211 and the second port 212 is not in fluid communication with each other. At this circumstance, the heat exchange medium 700 flowing out of the first heat exchange circuit 110 via the second interface end 112 can only flow into the second heat exchange circuit 120 through the second port 212 and the third port 213 in sequence; The heat exchange medium 700 flowing from the fourth interface end 122 of the second heat exchange circuit 120 can partially return to the second heat exchange circuit 120 through the fourth port 214 and the third port 213 in sequence, and partially flow into the first heat exchange circuit 110 through the fourth port 214 and the first port 211 in sequence. Therefore, at this circumstance, the heat exchange medium 700 can only circulate in the first fluid loop L1 and the third fluid loop L3 to improve the overall thermal efficiency of the thermal management system 10.

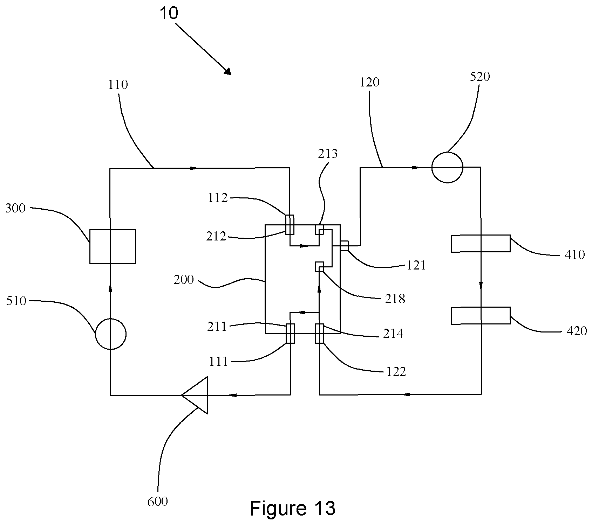

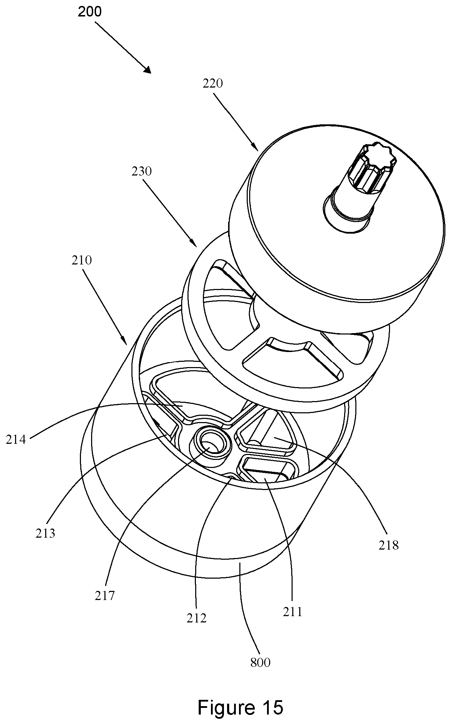

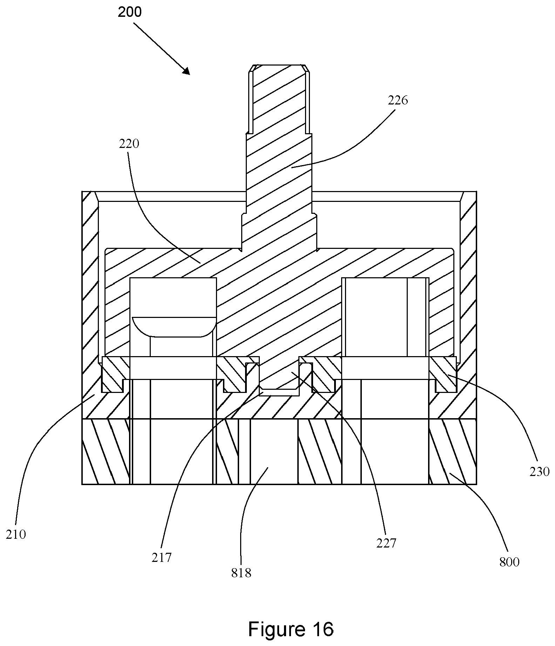

Referring to figure 13-20, the thermal management system 10 according to a third embodiment of present application is provided. In this embodiment, the valve 200 is different from that in the first embodiment.

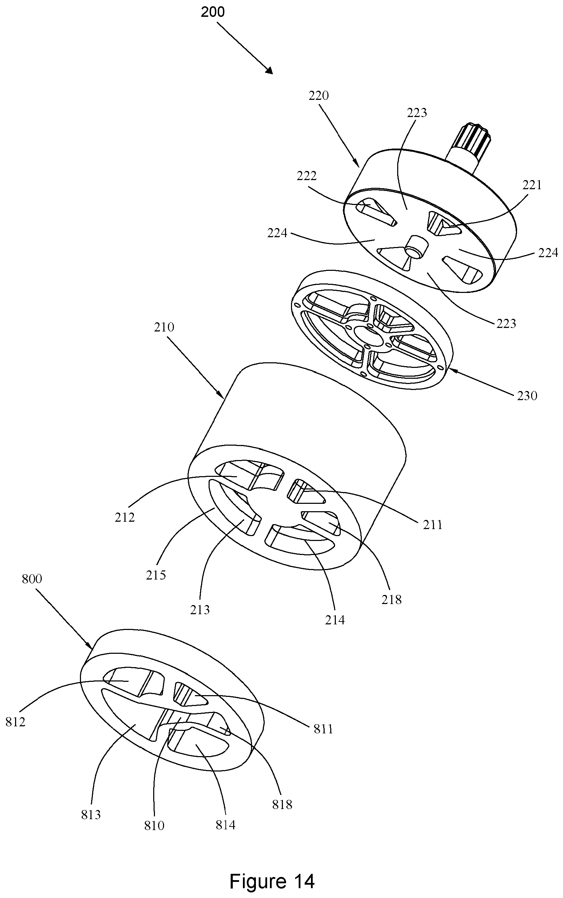

Referring to figure 14-17, the valve 200 includes a valve housing 210 and a valve core 220 rotatably mounted in the valve housing 210. an end plate 215 of the valve housing 210 defines a first port 211, a second port 212, a third port 213, a fourth port 214 and a fifth port 218. The first port 211 and the fifth port 218 respectively span a central angle of about 45°. The second port 212, the third port 213 and the fourth port 214 respectively span a central angle of about 90°.

Referring to figure 13, in this present embodiment, the thermal management system 10 also includes a first heat exchange circuit 110 and a second heat exchange circuit 120. The first heat exchange circuit includes opposite first interface end 111 and second interface end 112. The second heat exchange circuit 120 includes opposite third interface end 121 and fourth interface end 122. The third port 213 and the fifth port 218 are simultaneously connected to the third interface end 121 of the second heat exchange circuit 120; The first port 211, the second port 212, and the fourth port 214 are interconnected with the first interface end 111, the second interface end 112, and the fourth interface end 122, respectively.

In this embodiment, the thermal management system 10 further includes a manifold 800. The manifold 800 is attached to the end plate 215 of the valve housing 210, and defines a first connecting hole 811, a second connecting hole 812, a third connecting hole 813, a fourth connecting hole 814 and a fifth connecting hole 818, which are configured to interconnect the first to fifth ports 211, 212, 213, 214, 218 of the valve 200 to the first to fourth interface ends 111, 112, 121,122 of the first and second heat exchange circuits 110 and 120. The manifold 800 defines a groove 810 to communicate with both of the third connecting hole 813 and the fifth connecting hole 818. Therefore, the third port 213 and the fifth port 218 of the valve housing 210 are kept in fluid communication with each other and further communication with the third interface end 121 of the second heat exchange circuit 120 at the same time. In some embodiments, the manifold 800 and the valve housing 210 are integrally formed.

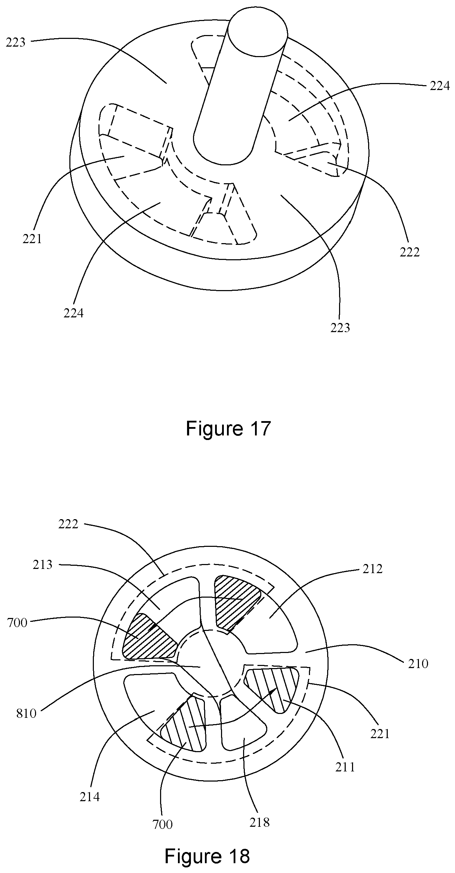

The valve core 220 defines a first flow channel 221 and a second flow channel 222. The first flow channel 221 and the second flow channel 222 are sector-shaped with a central angle less than 180° respectively. Two blocking portions 223 are respectively formed between the corresponding ends of the first flow channel 221 and the second flow channel 222 to avoid a fluid communication therebetween. Each of the blocking portions 223 spans a central angle of about 45°. Referring to figure 17, a baffle plate 224 is formed in each of the first and second flow channel 221, 222. The baffle plates 224 are arranged on a side of the valve core 220 facing the valve housing 210. A thickness of each baffle plate 224 is less than a depth of the first flow channel 221 or the second flow channel 222. Therefore, two circumferential ends of each of the first and second flow channels 222 are separated from each other.

Referring to Fig. 18, when the valve 200 is in a first work mode, the baffle plate 224 in the first flow channel 221 completely shields the fifth port 218, the baffle plate 224 in the second flow and the two blocking portions 223 respectively partially shield the second port 212, the third port 213 and the fourth port 214 respectively. The first flow channel 221 communicates with both of the first port 211 and the fourth port 214. The second flow channel 222 communicates with both of the second port 212 and the third port 213. Referring to the arrow in the figure 18, the heat exchange medium 700 flowing out of the first heat exchange circuit 110 via the second interface end 112 flows into the second heat exchange circuit 120 through the second port 212 and the third port 213 in sequence. The heat exchange medium 700 flowing out of the second heat exchange circuit 120 via the fourth interface end 122 flows back to the first heat exchange circuit 110 through the fourth port 214 and the first port 211 in sequence. Therefore, a fluid loop slimier to the first fluid loop L1 in first embodiment is formed.

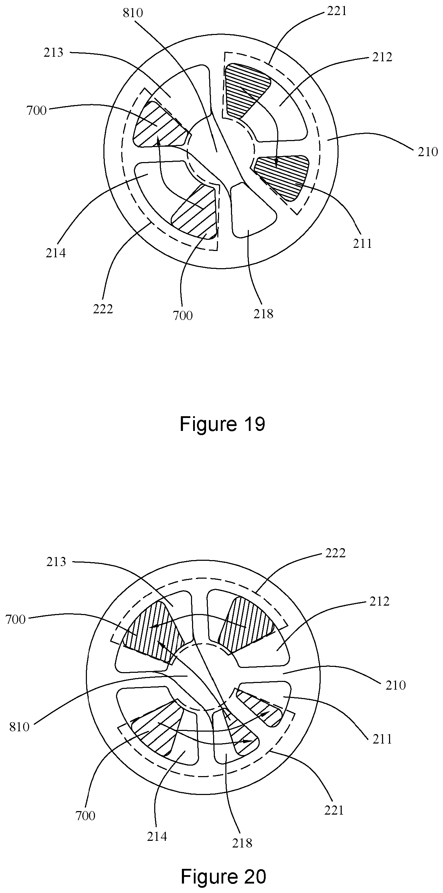

Referring to Fig. 19, when the valve 200 is switched to a second work mode, the fifth port 218 is completely shielded by one of the blocking portions 223; the first port 211 is completely unshielded; the second port 212, the third port 213 and the fourth port 214 are partially shielded by the other one of the blocking portions 223 and the two baffle plates 224. The first flow channel 221 communicates with both of the first port 211 and the second port 212ₒ The second flow channel 222 communicates with both of the third port 213 and the fourth port 214. Referring to the arrow in the figure 19, the heat exchange medium 700 flowing out of the first heat exchange circuit 110 via the second interface end 112 returns back to the first heat exchange circuit 110 through the second port 212 and the first port 211 in sequence to form a fluid loop slimier to the second fluid loop L2 in the first embodiment. The heat exchange medium 700 flowing out of the second heat exchange circuit 120 via the fourth interface end 122 returns back to the second heat exchange circuit 120 through the fourth port 214 and the third port 213 in sequence to form a fluid loop slimier to the third fluid loop L3 in the first embodiment.

Referring to figure 13 and figure 20, when the valve 200 is switched to a third work mode, the fourth port 214 and the fifth port 218 are partially shielded by the baffle plate 224 of the first flow channel 221 at the same time; The second port 212 and the third port 213 are partially shielded the baffle plate 224 of the second flow channel 222 at the same time. The fourth port 214 is enabled to in fluid communication with both of the first port 211 and the fifth port 218 simultaneously through the first flow channel 221. The second flow channel 222 communicates with both of the second port 212 and the third port 213. Since the third port 213 and the fifth port 218 are kept in fluid communication with each other via the groove 810, The third port 213 communicates with both of the second port 212 and the fifth port 218 at the same time. The second flow channel 222 can also communicate with the fifth port 218.

Referring to the arrow in the figure 13, the heat exchange medium 700 flows out of the second heat exchange circuit 120 via the fourth interface end 122 thereof partially flows into the first heat exchange circuit 110 through the fourth port 214 and the first port 211 in sequence, and partially returns back to the second heat exchange circuit 120 through the fourth port 214 and the fifth port 218 in sequence. The heat exchange medium 700 flowing out of the first heat exchange circuit 110 via second interface end 112 thereof partially flows into the second heat exchange circuit 120 through the second port 212 and the third port 213 in sequence. Therefore, fluid loops respectively similar to the first fluid loop L1 and the third fluid loop L3 in the first embodiment are formed simultaneously.

In present embodiment, by adjustment of the rotation angle of the valve core 220 as regard to the valve housing 210, communication and overlapping area between the first flow channel 221 and the first port 211, the fourth port 214 and the fifth port 218 can be adjusted. Therefore, a flow ratio of heat exchange medium 700 circulating in the first fluid loop L1 to that in third fluid loop L3 can be adjusted when the valve 200 is in the third work mode. For example, when the valve core 220 is rotated clockwise, the overlap areas of the first flow channel 221 and the first port 211 is increased, and the overlapping areas of the first flow channel 221 and the fifth port 218 is reduced simultaneously. Conversely, when valve core 220 is rotated counterclockwise, the overlapping areas of the first flow channel 221 and the first port 211 is reduced, and the overlapping areas of the first flow channel 221 and the fifth port 218 is increased.

Although certain embodiments of the present disclosure have been specifically described, these embodiments are provided as examples to aid in understanding the invention. The scope of the invention is defined by the claims, and any changes or modifications that fall within the scope of the claims are considered part of the invention.

## Claims

1. A thermal management system (10), comprising:
a first heat exchange circuit (110) and a second heat exchange circuit (120) configured for the heat exchange medium (700) circulating therein;
a functional part (300) capable of exchanging heat with the heat exchange medium (700) flowing in the first heat exchange circuit (110);
a heating module (400) connecting with the second heat exchanging circuit (120) and configured to heating the heat exchange medium (700) flowing in the second heat exchange circuit (120);
a valve (200) connecting with the first heat exchanging circuit (110) and the second heat exchanging circuit (120), the valve (200) defining a first flow channel (221) and a second flow channel (222) prevented from communicating with each other inside the valve (200); and configured to be switched among a first work mode, a second work mode, and a third work mode;
wherein:
in response to a first work mode of the valve (200), the first heat exchange circuit (110) and the second heat exchange circuit (120) are connected with each other in series to form a first fluid loop (L1);
in response to a second work mode of the valve (200), the first flow channel (221) is connected with the first heat exchange circuit (110) to form a second fluid loop (L2), at the same time, the second flow channel (222) is connected with the second heat exchange circuit (120) to form a third fluid loop (L3), the second fluid loop (L2) and the third fluid loop (L3) are connected in parallel and fluid isolation with each other;
in response to a third work mode of the valve (200), the first heat exchange circuit (110) and the second heat exchange circuit (120) are connected with each other in series to form the first fluid loop (L1), at the same time, the first flow channel (221) is connected the first heat exchange circuit (110) to form a second fluid loop (L2) and/or the second flow channel (222) is connected with the second heat exchange circuit (120) to form the third fluid loop (L3), a flow ratio of flow volume of heat exchange medium (700) circulating in the first fluid loop (L1) to the heat exchange medium (700) in the second and/or third fluid loop (L2/L3) can be adjusted by manipulation of the valve (200);
wherein the first heat exchange circuit (110) is provided with opposite first interface end (111) and second interface end (112);
the second heat exchange circuit (120) is provided with opposite third interface end (121) and fourth interface end (122);
the valve (200) comprises a valve housing (210) and a valve core (220) rotatably mounted in the valve housing (210);
the valve housing (210) defines a first port (211), a second port (212), a third port (213) and a fourth port (214), correspondingly aligned with the first interface end (111), the second interface end (112), the third interface end (113), and the fourth interface end (114);
the first flow channel (221) and the second flow channel (222) are defined in the valve core (220) and configured to selectively enable fluid communication among the first port (211), a second port (212), a third port (213) and a fourth port (214) by rotation of the valve (200) core as regard to the valve housing (210);
wherein the valve (200) further comprises a sealing member (230) positioned between the valve core (220) and the valve housing (210), the sealing member (230) defines four openings (231-234) respectively aligning with the first port (211), the second port (212), the third port (213) and the fourth port (214).

2. The thermal management system (10) of claim 1, wherein the valve core (220) are configured to be rotated between a first position and a second position, the valve (200) is switched to the first work mode in response to the valve core (220) is rotated to the first position to make the first flow channel (221) communicate with both of the first port (211) and the fourth port (214), and the second flow channel (222) communicate with both of the second port (212) and the third port (213); the valve (200) is switched to the second work mode in response to the valve core (220) which is rotated to the second position to make the first flow channel (221) communicate with both of the first port (211) and the second port (212), and the second flow channel (222) communicate with both of the third port (213) and the third port (214).

3. The thermal management system (10) of claim 2, wherein the valve (200) is switched to the third work mode in response to the valve core (200) which is rotated to a third position to enable the first port (211) to communicate with both of the second port (212) and the fourth port (214) through the first flow channel (221), and the third port (213) to communicate with both of the second port (212) and the fourth port (214) through the second flow channel (222); by rotating the valve core (220) as regard to the valve housing (210) in a range between the first portion and the second position, a ratio of an overlapping area between the first flow channel (221) and the second port (212) to that between the first flow channel (221) and the fourth port (214) is variable, a ratio of an overlapping area between the second flow channel (222) and the second port (212) to that between second flow channel (222) and the fourth port (214) is variable.

4. The thermal management system (10) of any of claims 1-3, wherein the valve housing (210) is cylindrical and the first port (211), the second port (212), the third port (213) and the fourth port (214) are defined in an axial end of the valve housing (210).

5. The thermal management system (10) of claim 4, wherein the first port (211), the second port (212), the third port (213) and the fourth port (214) are all sector-shaped and arranged at intervals in the circumferential direction.

6. The thermal management (10) system of claim 5, wherein each of the first flow channel (221) and the second flow channel (222) is semicircular and spans a central angle of about 180°, each of the first port (211), the second port (212), the third port (213) and the fourth port (214) is sector-shaped, and spans a central angle of about 90°.

7. The thermal management system (10) of claim 1, wherein the valve housing (210) is hollow cylindrical, and the valve core (220) is cylindrical and rotatably accommodated in the valve housing (210).

8. The thermal management system (10) of claim 1, wherein the valve core (220) further comprises a shaft (226) extending outwards to connecting with a driving unit configured to drive the valve core (220) to rotate.

9. The thermal management system (10) of claim 2, wherein the valve housing (210) is further provided with a fifth port (218), the third port (213) and the fifth port (218) are simultaneously connected to the third interface end (121) of the second heat exchange circuit (120); the valve (200) is switched to the third work mode in response to the valve core (220) being rotated to a third position to enable the fourth port (214) to communicate with both of the first port (211) and the fifth port (218) through the first flow channel (221), and the third port (213) to communicate with the second port (212) through the second flow channel (222).

10. The thermal management system (10) of claim 9, further comprising a manifold (800), wherein the manifold (800) is positioned between the valve (200) and the first and second heat exchange circuits (110; 120) and configured to interconnect the first to fifth ports (211, 212, 213, 214, 218) of the valve to the first to forth interface ends (111, 112, 121, 122), the manifold (800) defines a groove to enable the third port (213) and the fifth port (218) to be kept in fluid communication with each other.

11. The thermal management system (10) of claim 1, wherein the functional part (300) is a battery.

12. The thermal management system (10) of claim 1, wherein the heating module (400) comprises a heating element (410) and a heat exchanger (420).

13. The thermal management system (10) of claim 1, wherein the heating element (410) is a positive temperature coefficient ceramic.

## Patentansprüche

1. Wärmeverwaltungssystem (10), umfassend:
einen ersten Wärmetauschkreislauf (110) und einen zweiten Wärmetauschkreislauf (120), die dazu konfiguriert sind, dass das Wärmetauschmedium (700) darin zirkuliert;
ein Funktionsteil (300), das Wärme mit dem Wärmetauschmedium (700) tauschen können, das in dem ersten Wärmetauschkreislauf (110) strömt;
ein Heizmodul (400), das sich mit dem zweiten Wärmetauschkreislauf (120) verbindet und dazu konfiguriert ist, das Wärmetauschmedium (700) zu erhitzen, das in dem zweiten Wärmetauschkreislauf (120) strömt;
ein Ventil (200), das sich mit dem ersten Wärmetauschkreislauf (110) und dem zweiten Wärmetauschkreislauf (120) verbindet, wobei das Ventil (200) einen ersten Strömungskanal (221) und einen zweiten Strömungskanal (222) definiert, die daran gehindert werden, im Inneren des Ventils (200) miteinander zu kommunizieren; und dazu konfiguriert ist, zwischen einem ersten Arbeitsmodus, einem zweiten Arbeitsmodus und einem dritten Arbeitsmodus geschaltet zu werden;
wobei:
als Reaktion auf einen ersten Arbeitsmodus des Ventils (200) der erste Wärmetauschkreislauf (110) und der zweite Wärmetauschkreislauf (120) in Reihe miteinander verbunden werden, um eine erste Fluidschleife (L1) zu bilden;
als Reaktion auf einen zweiten Arbeitsmodus des Ventils (200) der erste Strömungskanal (221) mit dem ersten Wärmetauschkreislauf (110) verbunden wird, um eine zweite Fluidschleife (L2) zu bilden, wobei gleichzeitig der zweite Strömungskanal (222) mit dem zweiten Wärmetauschkreislauf (120) verbunden wird, um eine dritte Fluidschleife (L3) zu bilden, wobei die zweite Fluidschleife (L2) und die dritte Fluidschleife (L3) parallel und in Fluidisolation miteinander verbunden sind;
als Reaktion auf einen dritten Arbeitsmodus des Ventils (200) der erste Wärmetauschkreislauf (110) und der zweite Wärmetauschkreislauf (120) in Reihe miteinander verbunden werden, um die erste Fluidschleife (L1) zu bilden, wobei gleichzeitig der erste Strömungskanal (221) mit dem ersten Wärmetauschkreislauf (110) verbunden wird, um eine zweite Fluidschleife (L2) zu bilden, und/oder der zweite Strömungskanal (222) mit dem zweiten Wärmetauschkreislauf (120) verbunden wird, um die dritte Fluidschleife (L3) zu bilden, wobei ein Strömungsverhältnis eines Strömungsvolumens eines Wärmetauschmediums (700), das in der ersten Fluidschleife (L1) zirkuliert, zu dem Wärmetauschmedium (700) in der zweiten und/oder der dritten Fluidschleife (L2/L3) durch eine Manipulation des Ventils (200) justiert werden kann;
wobei der erste Wärmetauschkreislauf (110) mit einem ersten Schnittstellenende (111) und einem zweiten Schnittstellenende (112) versehen ist, die zueinander entgegengesetzt sind;
wobei der zweite Wärmetauschkreislauf (120) mit einem dritten Schnittstellenende (121) und einem vierten Schnittstellenende (122) versehen ist, die zueinander entgegengesetzt sind;
wobei das Ventil (200) ein Ventilgehäuse (210) und einen Ventileinsatz (220) umfasst, der drehbar in dem Ventilgehäuse (210) montiert ist;
wobei das Ventilgehäuse (210) einen ersten Anschluss (211), einen zweiten Anschluss (212), einen dritten Anschluss (213) und einen vierten Anschluss (214) definiert, die entsprechend auf das erste Schnittstellenende (111), das zweite Schnittstellenende (112), das dritte Schnittstellenende (113) und das vierte Schnittstellenende (114) ausgerichtet sind;
wobei der erste Strömungskanal (221) und der zweite Strömungsende (222) in dem Ventileinsatz (220) definiert sind und dazu konfiguriert sind, eine Fluidkommunikation selektiv zwischen dem ersten Anschluss (211), einem zweiten Anschluss (212), einem dritten Anschluss (213) und einem vierten Anschluss (214) durch Drehung des Einsatzes des Ventils (200) in Bezug auf das Ventilgehäuse (210) zu ermöglichen;
wobei das Ventil (200) ferner ein Dichtungselement (230) umfasst, das zwischen dem Ventileinsatz (220) und dem Ventilgehäuse (210) positioniert ist, wobei das Dichtungselement (230) vier Öffnungen (231-234) definiert, die sich jeweils auf den ersten Anschluss (211), den zweiten Anschluss (212), den dritten Anschluss (213) und den vierten Anschluss (214) ausrichten.

2. Wärmeverwaltungssystem (10) nach Anspruch 1, wobei der Ventileinsatz (220) dazu konfiguriert ist, zwischen einer ersten Position und einer zweiten Position gedreht zu werden, wobei das Ventil (200) in den ersten Arbeitsmodus als Reaktion darauf geschaltet wird, dass der Ventileinsatz (220) in die erste Position gedreht wird, um zu bewirken, dass der erste Strömungskanal (221) mit sowohl dem ersten Anschluss (211) als auch dem vierten Anschluss (214) kommuniziert und der zweite Strömungskanal (222) mit sowohl dem zweiten Anschluss (212) als auch dem dritten Anschluss (213) kommuniziert; wobei das Ventil (200) in den zweiten Arbeitsmodus als Reaktion auf den Ventileinsatz (220) geschaltet wird, der in die zweite Position gedreht wird, um zu bewirken, dass der erste Strömungskanal (221) mit sowohl dem ersten Anschluss (211) als auch dem zweiten Anschluss (212) kommuniziert und der zweite Strömungskanal (222) mit sowohl dem dritten Anschluss (213) als auch dem dritten Anschluss (214) kommuniziert.

3. Wärmeverwaltungssystem (10) nach Anspruch 2, wobei das Ventil (200) in den dritten Arbeitsmodus als Reaktion auf den Ventileinsatz (200) geschaltet wird, der in eine dritte Position gedreht wird, um zu ermöglichen, dass der erste Anschluss (211) durch den ersten Strömungskanal (221) mit sowohl dem zweiten Anschluss (212) als auch dem vierten Anschluss (214) kommuniziert und der dritte Anschluss (213) durch den zweiten Strömungskanal (222) mit sowohl dem zweiten Anschluss (212) als auch dem vierten Anschluss (214) kommuniziert; durch Drehen des Ventileinsatzes (220) in Bezug auf das Ventilgehäuse (210) in einet Spannbreite zwischen dem ersten Abschnitt und der zweiten Position, wobei ein Verhältnis eines überlappenden Bereichs zwischen dem ersten Strömungskanal (221) und dem zweiten Anschluss (212) zu dem zwischen dem ersten Strömungskanal (221) und dem vierten Anschluss (214) variabel ist, wobei ein Verhältnis eines überlappenden Bereichs zwischen dem zweiten Strömungskanal (222) und dem zweiten Anschluss (212) zu dem zwischen dem zweiten Strömungskanal (222) und dem vierten Anschluss (214) variabel ist.

4. Wärmeverwaltungssystem (10) nach einem der Ansprüche 1-3, wobei das Ventilgehäuse (210) zylindrisch ist und der erste Anschluss (211), der zweite Anschluss (212), der dritte Anschluss (213) und der vierte Anschluss (214) in einem axialen Ende des Ventilgehäuses (210) definiert sind.

5. Wärmeverwaltungssystem (10) nach Anspruch 4, wobei der erste Anschluss (211), der zweite Anschluss (212), der dritte Anschluss (213) und der vierte Anschluss (214) alle sektorförmig sind und in Intervallen in der Umfangsrichtung eingerichtet sind.

6. Wärmeverwaltungssystem (10) nach Anspruch 5, wobei jeder von dem ersten Strömungskanal (221) und dem zweiten Strömungskanal (222) halbkreisförmig ist und einen zentralen Winkel von etwa 180° überspannt, wobei jeder von dem ersten Anschluss (211), dem zweiten Anschluss (212), dem dritten Anschluss (213) und dem vierten Anschluss (214) sektorförmig ist und einen zentralen Winkel von etwa 90° überspannt.

7. Wärmeverwaltungssystem (10) nach Anspruch 1, wobei das Ventilgehäuse (210) hohlzylindrisch ist und der Ventileinsatz (220) zylindrisch ist und drehbar in dem Ventilgehäuse (210) untergebracht ist.

8. Wärmeverwaltungssystem (10) nach Anspruch 1, wobei der Ventileinsatz (220) ferner eine Welle (226) umfasst, die sich nach außen erstreckt, um sich mit einer Antriebseinheit zu verbinden, die dazu konfiguriert ist, den Ventileinsatz (220) zum Drehen anzutreiben.

9. Wärmeverwaltungssystem (10) nach Anspruch 2, wobei das Ventilgehäuse (210) ferner mit einem fünften Anschluss (218) versehen ist, wobei der dritte Anschluss (213) und der fünfte Anschluss (218) gleichzeitig mit dem dritten Schnittstellenende (121) des zweiten Wärmetauschkreislaufs (120) verbunden sind; wobei das Ventil (200) in den dritten Arbeitsmodus als Reaktion darauf geschaltet wird, dass der Ventileinsatz (220) in eine dritte Position gedreht wird, um zu ermöglichen, dass der vierte Anschluss (214) durch den ersten Strömungskanal (221) mit sowohl dem ersten Anschluss (211) als auch dem fünften Anschluss (218) kommuniziert und der dritte Anschluss (213) durch den zweiten Strömungskanal (222) mit dem zweiten Anschluss (212) kommuniziert.

10. Wärmeverwaltungssystem (10) nach Anspruch 9, ferner umfassend einen Verteiler (800), wobei der Verteiler (800) zwischen dem Ventil (200) und dem ersten und dem zweiten Wärmetauschkreislauf (110; 120) positioniert ist und dazu konfiguriert ist, den ersten bis zu dem fünften Anschluss (211, 212, 213, 214, 218) des Ventils mit dem ersten bis zu dem vierten Schnittstellenende (111, 112, 121, 122) untereinander zu verbinden, wobei der Verteiler (800) eine Nut definiert, um zu ermöglichen, dass der dritte Anschluss (213) und der fünfte Anschluss (218) in Fluidkommunikation miteinander gehalten werden.

11. Wärmeverwaltungssystem (10) nach Anspruch 1, wobei das Funktionsteil (300) eine Batterie ist.

12. Wärmeverwaltungssystem (10) nach Anspruch 1, wobei das Heizmodul (400) ein Heizelement (410) und einen Wärmetauscher (420) umfasst.

13. Wärmeverwaltungssystem (10) nach Anspruch 1, wobei das Heizelement (410) eine Keramik mit einem positiven Temperaturkoeffizienten ist.

## Revendications

1. Un système de gestion thermique (10), comprenant :
un premier circuit d'échange thermique (110) et un second circuit d'échange thermique (120) configurés pour permettre la circulation du fluide caloporteur (700) à l'intérieur de ceux-ci ;
une partie fonctionnelle (300) apte à échanger de la chaleur avec le fluide caloporteur (700) circulant dans le premier circuit d'échange thermique (110) ;
un module de chauffage (400) raccordé au second circuit d'échange thermique (120) et configuré pour chauffer le fluide caloporteur (700) circulant dans le second circuit d'échange thermique (120) ;
une vanne (200) raccordée au premier circuit d'échange thermique (110) et au second circuit d'échange thermique (120), la vanne (200) définissant un premier canal d'écoulement (221) et un second canal d'écoulement (222) qui sont empêchés de communiquer entre eux à l'intérieur de la vanne (200), et étant configurée pour être commutée entre un premier mode de fonctionnement, un second mode de fonctionnement et un troisième mode de fonctionnement ;
dans lequel :
selon un premier mode de fonctionnement de la vanne (200), le premier circuit d'échange thermique (110) et le second circuit d'échange thermique (120) sont raccordés en série l'un à l'autre de manière à former une première boucle de fluide (L1) ;
selon un second mode de fonctionnement de la vanne (200), le premier canal d'écoulement (221)
est raccordé au premier circuit d'échange thermique (110) de manière à former une seconde boucle de fluide (L2), tandis que le second canal d'écoulement (222) est raccordé au second circuit d'échange thermique (120) de manière à former une troisième boucle de fluide (L3), la seconde boucle de fluide (L2) et la troisième boucle de fluide (L3) étant raccordées en parallèle tout en étant isolées l'une de l'autre sur le plan fluidique ;
selon un troisième mode de fonctionnement de la vanne (200), le premier circuit d'échange thermique (110) et le second circuit d'échange thermique (120) sont raccordés en série l'un à l'autre de manière à former la première boucle de fluide (L1), tandis que le premier canal d'écoulement (221) est raccordé au premier circuit d'échange thermique (110) de manière à former la seconde boucle de fluide (L2) et/ou le second canal d'écoulement (222) est raccordé au second circuit d'échange thermique (120) de manière à former la troisième boucle de fluide (L3), un rapport entre le débit volumique du fluide caloporteur (700) circulant dans la première boucle de fluide (L1) et le débit volumique du fluide caloporteur (700) circulant dans la seconde et/ou la troisième boucle de fluide (L2/L3) peut être réglé par actionnement de la vanne (200) ;
dans lequel le premier circuit d'échange thermique (110) présente une première extrémité d'interface (111) et une seconde extrémité d'interface (112) opposées l'une à l'autre ;
le second circuit d'échange thermique (120) présente une troisième extrémité d'interface (121) et une quatrième extrémité d'interface (122) opposées l'une à l'autre ;
la vanne (200) comprend un corps de vanne (210) et un boisseau de vanne (220) monté de manière rotative dans le corps de vanne (210) ;
le corps de vanne (210) définit un premier orifice (211), un second orifice (212), un troisième orifice (213) et un quatrième orifice (214), respectivement alignés avec la première extrémité d'interface (111), la seconde extrémité d'interface (112), la troisième extrémité d'interface (121) et la quatrième extrémité d'interface (122) ;
le premier canal d'écoulement (221) et le second canal d'écoulement (222) sont définis dans le boisseau de vanne (220) et sont configurés pour établir sélectivement une communication fluidique entre le premier orifice (211), le second orifice (212), le troisième orifice (213) et le quatrième orifice (214), par rotation du boisseau de vanne (220) par rapport au corps de vanne (210) ;
dans lequel la vanne (200) comprend en outre un élément d'étanchéité (230) disposé entre le boisseau de vanne (220) et le corps de vanne (210), l'élément d'étanchéité (230)
définissant quatre ouvertures (231 à 234) respectivement alignées avec le premier orifice (211), le second orifice (212), le troisième orifice (213) et le quatrième orifice (214).

2. Le système de gestion thermique (10) selon la revendication 1, dans lequel le boisseau de vanne (220) est configuré pour pivoter entre une première position et une seconde position, la vanne (200) est configurée pour commuter au premier mode de fonctionnement lorsque le boisseau de vanne (220) est pivoté à la première position, de sorte que le premier canal d'écoulement (221) communique avec le premier orifice (211) et le quatrième orifice (214), et le second canal d'écoulement
(222) communique avec le second orifice (212) et le troisième orifice (213) ; la vanne (200) est configurée pour commuter au second mode de fonctionnement lorsque le boisseau de vanne (220)
est pivotée à la seconde position de sorte que le premier canal d'écoulement
(221) puisse communiquer à la fois avec le premier orifice (211) et le second orifice (212), et le second canal d'écoulement (222) puisse communiquer à la fois avec le troisième orifice
(213) et le quatrième orifice (214).

3. Le système de gestion thermique (10) selon la revendication 2, dans lequel la vanne (200) est commutée au troisième mode de fonctionnement lorsque le boisseau de vanne (220) est amené en rotation jusqu'à une troisième position, de manière à permettre au premier orifice (211) de communiquer
à la fois avec le second orifice (212) et le quatrième orifice (214) par l'intermédiaire du premier canal d'écoulement (221), et avec le troisième orifice (213) de communiquer à la fois avec le second orifice (212) et le quatrième orifice (214) par l'intermédiaire du second canal d'écoulement (222) ; par rotation du boisseau de vanne (220) par rapport au corps de vanne (210) dans une plage comprise entre la première position et la seconde position, le rapport entre la surface de recouvrement entre le premier canal d'écoulement (221) et le second orifice (212) et la surface de recouvrement entre le premier canal d'écoulement (221) et le quatrième orifice (214) est variable, et le rapport entre la surface de recouvrement entre le second canal d'écoulement (222) et du second orifice
(212) et celle entre le second canal d'écoulement (222) et le quatrième orifice (214) est variable.

4. Le système de gestion thermique (10) selon l'une quelconque des revendications 1 à 3, dans lequel le corps de vanne (210) est de forme cylindrique et le premier orifice (211), le second orifice (212), le troisième orifice (213) et le quatrième orifice (214) sont définis dans une extrémité axiale du corps de vanne (210).

5. Le système de gestion thermique (10) selon la revendication 4, dans lequel le premier orifice (211), le second orifice (212), le troisième orifice (213) et le quatrième orifice (214) sont tous en forme de secteur et sont disposés à intervalles dans la direction circonférentielle.

6. Le système de gestion thermique (10) selon la revendication 5, dans lequel chacun du premier canal d'écoulement (221) et du second canal d'écoulement (222) est semi-circulaire et sous-tend un angle central d'environ 180°, chacun du premier orifice (211), du second orifice (212), du troisième orifice (213) et du quatrième orifice (214) est en forme de secteur et sous-tend un angle central d'environ 90°.

7. Le système de gestion thermique (10) selon la revendication 1, dans lequel le corps de vanne (210) est cylindrique creux, et le boisseau de vanne (220) est cylindrique et est logé de manière rotative dans le corps de vanne (210).

8. Le système de gestion thermique (10) selon la revendication 1, dans lequel le boisseau de vanne (220) dispose en outre d'un arbre (226) s'étendant vers l'extérieur pour être raccordé à une unité d'entraînement configurée pour entraîner en rotation le boisseau de vanne (220).

9. Le système de gestion thermique (10) selon la revendication 2, dans lequel le corps de vanne (210) dispose en outre d'un cinquième orifice (218), le troisième orifice (213) et le cinquième orifice
(218) sont simultanément raccordés à la troisième extrémité d'interface (121) du second circuit d'échange thermique (120) ; la vanne (200) est configurée pour commuter au troisième mode de fonctionnement lorsque le boisseau de vanne (220) est amené en rotation jusqu'à une troisième position, de manière à permettre au quatrième orifice (214) de communiquer à la fois avec le premier orifice (211) et le cinquième orifice (218) par l'intermédiaire du premier canal d'écoulement (221), et au troisième orifice
(213) et de communiquer avec le second orifice (212) par l'intermédiaire du second canal d'écoulement (222).

10. Le système de gestion thermique (10) selon la revendication 9, comprenant en outre un collecteur (800), ledit collecteur (800) étant disposé entre la vanne (200) et les premier et second circuits d'échange thermique (110 ; 120) et configuré pour raccorder les premier, second, troisième, quatrième et cinquième orifices (211, 212, 213, 214, 218) de la vanne
aux première à quatrième extrémités d'interface (111, 112, 121, 122), ledit collecteur (800) définissant une rainure permettant de maintenir le troisième orifice (213) et le cinquième orifice (218) en communication fluidique l'un avec l'autre.

11. Le système de gestion thermique (10) selon la revendication 1, dans lequel la partie fonctionnelle
(300) est une batterie.

12. Le système de gestion thermique (10) selon la revendication 1, dans lequel le module de chauffage
(400) comprend un élément chauffant (410) et un échangeur thermique (420).

13. Le système de gestion thermique (10) selon la revendication 1, dans lequel l'élément chauffant
(410) est une céramique à coefficient de température positif.
